# EUROPEAN PATENT APPLICATION

(11) **EP 2 420 650 A2**
(43) Date of publication of application: **22.02.2012**
(21) Application number: 10161475.8
(22) Date of filing: 29.04.2010
(51) Int. Cl.: F01D 11/04, F01D 11/00, F02C 7/28

(54) **Steam turbine, system, and method of operation**

(30) Priority: 05.05.2009 US 436114
(71) Applicant: General Electric Company, Schenectady, NY 12345 (US)
(72) Inventor: Sanchez, Nestor Hernandez, Schenectady, NY 12304 (US)
(74) Representative: Gray, Thomas

(57) **Abstract**

Embodiments of the invention relate generally to steam turbines (200, 400), steam turbine systems, and methods for their operation and, more particularly, to high-pressure - intermediate-pressure (HPIP) steam turbine configurations having pressure drop-limited seals and exhibiting reduced mid-packing (230) and/or end-packing (470, 430A-B, 490) leakage. One embodiment of the invention provides a combined high-pressure - intermediate-pressure (HPIP) steam turbine (200) comprising: a high-pressure section (210); an intermediate-pressure section (250) sharing a common rotor (234) with the high-pressure section (210); at least one packing ring (240A-C) disposed along a length of the rotor (234) and between the high-pressure section (210) and the intermediate-pressure section (250); and at least one conduit (264) having a first end (264A) disposed adjacent a packing ring (240C) and a second end (264B) disposed adjacent a steampath stage (212E) of the high-pressure section (210).

## Description

### BACKGROUND OF THE INVENTION

Embodiments of the invention relate generally to steam turbines, steam turbine systems, and methods for their operation and, more particularly, to high-pressure - intermediate-pressure (HPIP) steam turbine configurations having pressure drop-limited seals and exhibiting reduced mid-packing and/or end-packing leakage.

All combined HPIP steam turbine configurations are susceptible to mid-packing leakage between the high-pressure (HP) section and the intermediate-pressure (IP) section. This mid-packing leakage is driven by a significant pressure ratio between the HP and IP sections (represented by arrow A in the drawings), as well as high operating temperatures in these areas. Typically, such leakage represents between 70% and 90% of the total leakage loss in the steam turbine. In separate HPIP sections, the highest leakages correspond to the high pressure drop and high temperature areas, which are the HP and IP inlet areas.

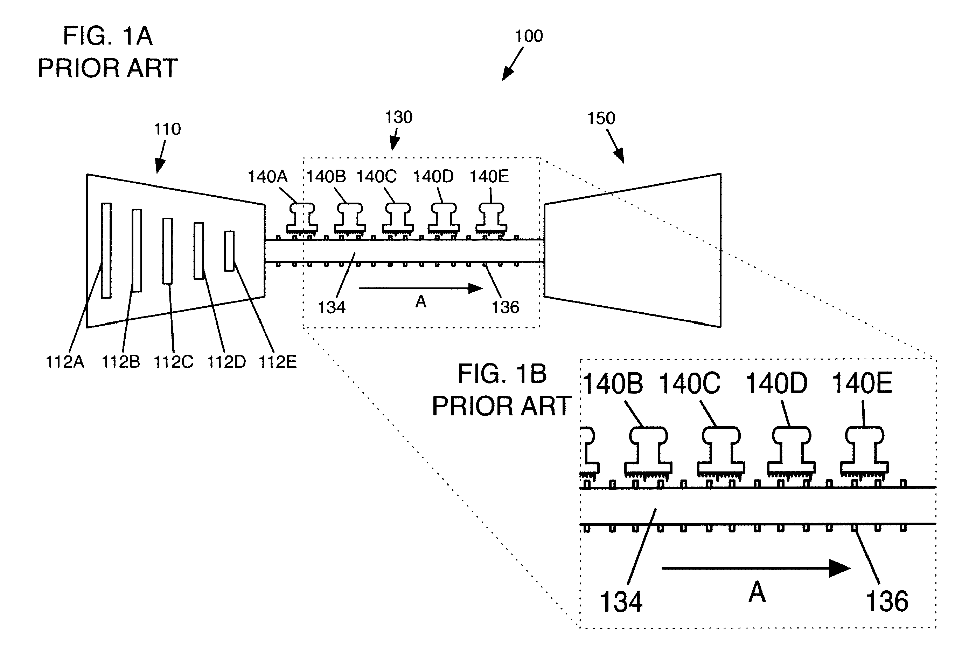

A schematic cross-sectional view typical of a known combined HPIP steam turbine is shown in FIGS. 1A-B. With reference to FIG. 1, the steam turbine 100 comprises an HP section 110, an IP section 150, and a mid-packing section 130 herebetween. The HP section 110 includes a plurality of steampath stages 112A-E. The mid-packing section 130 includes a plurality of packing rings 140A-E positioned along a length of a rotor 134. Leakage is reduced by the proximity of packing teeth 136 of the rotor 134 to corresponding teeth of packing rings 140A-E. Such proximity is shown more clearly in the detailed view of FIG. 1B. Steam flow is generally along path A, from the HP section 110 to the IP section 150.

One approach to reducing mid-packing leakage and improving overall turbine efficiency has been to increase the number of packing teeth 136 along rotor 134. This restricts flow, which would otherwise be expected to reduce leakage to some degree. However, the additional packing teeth require a greater bearing span, which in turn results in a more flexible rotor and necessarily larger radial clearances. These larger radial clearances increase leakage flow. As a result, little improvement is seen with respect to reduced mid-packing leakage or turbine efficiency.

Other sealing devices, such as those incorporating brush seals and leaf seals, provide small radial clearances and have been employed in other contexts. However, brush seals, leaf seals, and similar devices (referred to herein as pressure drop-limited seals) cannot be used where a large pressure difference is found across the seal. Typically, such pressure differences cannot be greater than about 21.1 kg/cm² (about 300 p.s.i.) Pressures at the HP section of a typical HPIP steam turbine may be as high as 316 kg/cm² (4500 p.s.i.), while pressures at the IP section are generally between 28.1 kg/cm² (400 p.s.i.) and 35.2 kg/cm² (500 p.s.i.). As a result, the pressure difference across each packing ring is too great for the use of pressure drop-limited seals such as brush seals or leaf seals.

### BRIEF DESCRIPTION OF THE INVENTION

One embodiment of the invention provides combined high-pressure - intermediate-pressure (HPIP) steam turbine comprising: a high-pressure section; an intermediate-pressure section sharing a common rotor with the high-pressure section; at least one packing ring disposed along a length of the rotor and between the high-pressure section and the intermediate-pressure section; and at least one conduit having a first end disposed adjacent a packing ring and a second end disposed adjacent a steampath stage of the high-pressure section.

Another embodiment of the invention provides a separate high-pressure - intermediate-pressure (HPIP) steam turbine comprising: a high-pressure section; an intermediate-pressure section; a low-pressure section; at least one rotor engaging at least one of the high-pressure section, the intermediate-pressure section, or the low-pressure section; an end-packing region having at least one packing ring disposed along a length of the at least one rotor; and at least one conduit having a first end disposed adjacent the end-packing region and a second end disposed adjacent a steampath stage of the high-pressure section.

Yet another embodiment of the invention provides a steam turbine system comprising: a high-pressure - intermediate-pressure (HPIP) steam turbine comprising: a high-pressure section; an intermediate-pressure section; at least one rotor engaging at least one of the high-pressure section and the intermediate-pressure section; at least one packing ring disposed along a length of the at least one rotor; and at least one conduit having a first end disposed adjacent a packing ring and a second end disposed adjacent a steampath stage of the high-pressure section; and a steam-generating apparatus for providing a quantity of steam to the steam turbine.

Still another embodiment of the invention provides a method of reducing mid-packing leakage in a high-pressure - intermediate-pressure (HPIP) steam turbine, the method comprising: directing a quantity of steam between a steampath stage of a high-pressure section of the HPIP steam turbine and a mid-packing section of the HPIP steam turbine containing at least one packing ring.

### BRIEF DESCRIPTION OF THE DRAWINGS

There follows a detailed description of embodiments of the invention by way of example only with reference to the accompanying drawings, in which:
FIG. 1A shows a schematic cross-sectional view of a know combined high-pressure - intermediate-pressure (HPIP) steam turbine;
FIG. 1B shows a detailed view of a portion of the HPIP steam turbine of FIG. 1A;
FIG. 2 shows a schematic cross-sectional view of a combined HPIP steam turbine according to one embodiment of the invention; and
FIG. 3 shows a schematic cross-sectional view of a packing ring containing a pressure drop-limited seal suitable for use in various embodiments of the invention; and
FIG. 4 shows a schematic cross-sectional view of a separate HPIP steam turbine according to one embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

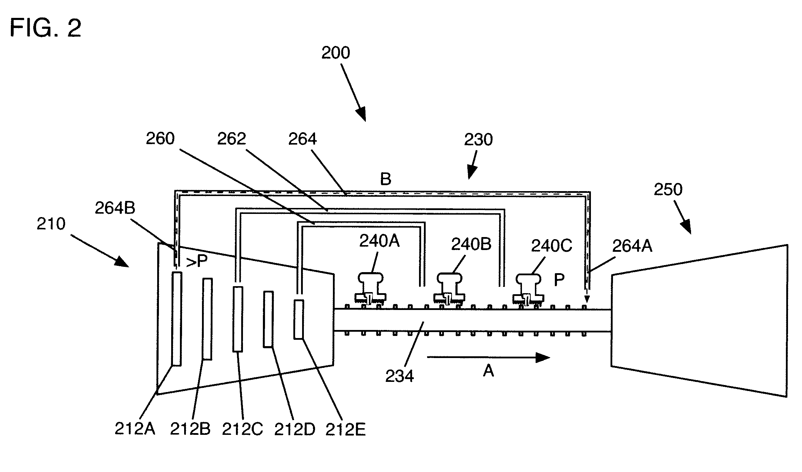

FIG. 2 shows a schematic cross-sectional view of a combined high-pressure - intermediate-pressure (HPIP) steam turbine according to an embodiment of the invention. As in known devices, such as that shown in FIG. 1A, the HPIP steam turbine 200 of FIG. 2 includes a high-pressure (HP) section 210, an intermediate-pressure (IP) section 250, and a mid-packing section 230 therebetween. The mid-packing section 230 includes a rotor 234 disposed between the HP section 210 and the IP section 250 and a plurality of packing rings 240A-C along its length.

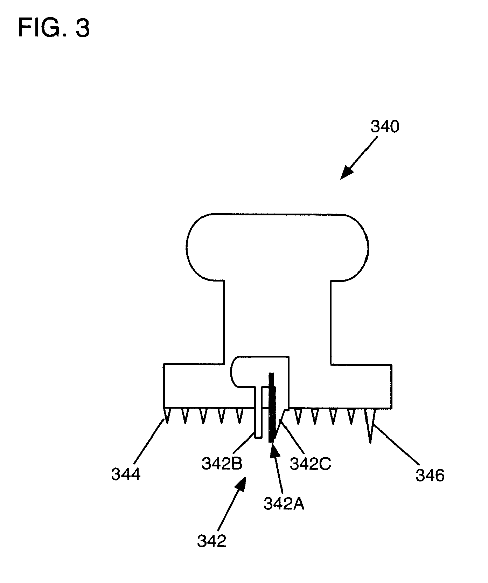

The embodiment of the invention shown in FIG. 2, however, includes packing rings 240A-C having pressure drop-limited seals (shown in FIG. 3 and described in greater detail below). The use of pressure drop-limited seals is made possible by the inclusion of conduits or "leak-off lines" 260, 262, 264 between the mid-packing section 230 and steampath stages 212A, 212C, 212E of the HP section 210, through which a quantity of high-pressure steam may travel (e.g., along path B, through conduit 264). Steam flow through the conduits determines the pressure difference across the packing rings 240A, 240B, 240C.

The conduit or leak-off line may be of any material capable of containing and permitting the movement of steam having a temperature and pressure found within the HP section. Each conduit or leak-off line 264 includes a first end 264A adjacent a packing ring 240C and a second end 264B adjacent a steampath stage 212A of the HP section 210. (For the sake of simplicity, the first and second ends of the conduit or leak-off line are shown only with respect to conduit or leak-off line 264. It should be understood, however, that other conduits or leak-off lines 260, 262 would also include first and second ends.)

The resulting pressure difference across the pressure drop-limited seal(s) may vary, depending, for example, on the number of conduits or leak-off lines employed. The pressure difference across the seal should, however, be no greater than the maximum design pressure difference of the seal. The maximum design pressure difference of typical brush seals, for example, is between about 14.1 kg/cm² (about 200 p.s.i.) and about 21.1 kg/cm² (about 300 p.s.i.). In the case where a brush seal is used, therefore, the pressure difference across the brush seal may be no greater than, and preferably less than, about 21.1 kg/cm² (about 300 p.s.i.), more preferably less than about 17.6 kg/cm² (about 250 p.s.i.), and still more preferably less than about 14.1 kg/cm² (about 200 p.s.i.).

Some embodiments of the invention may include as few as one conduit or leak-off line, while other embodiments of the invention, such as that shown in FIG. 2, may contain a plurality of such conduits or leak-off lines. In addition, some embodiments of the invention may include one packing ring having a pressure drop-limited seal while other embodiments of the invention may contain a plurality of such packing rings. For example, it may be possible, in some embodiments, to substantially reduce mid-packing leakage and/or improve turbine efficiency by the inclusion of a single packing ring having a pressure drop-limited seal, such as a brush seal, and a single conduit or leak-off line. Other conventional packing rings, such as those shown in FIGS. 1A-B (140A-E) may also be employed in such embodiments.

In other embodiments of the invention, the inclusion of a plurality of packing rings containing pressure drop-limited seals, while further reducing mid-packing leakage and/or improving turbine efficiency, may confer an additional benefit in that it affords the ability to reduce the overall length of the rotor 234 through the use of fewer, more efficient packing rings (i.e., those containing pressure drop-limited seals). As noted above, increasing the number of packing rings results in an increased bearing span (longer rotor), greater rotor flexibility, and larger radial clearances. Contrarily, the use of fewer packing rings, as embodiments of the invention make possible, allows for a reduced bearing span (shorter rotor), less rotor flexibility, and smaller radial clearances. Thus, while embodiments of the invention reduce mid-packing leakage and/or improve turbine efficiency through the use of packing rings having pressure drop-limited seals, the reduced bearing span made possible by the use of such packing rings may yield an additional reduction in mid-packing leakage and/or improvement in turbine efficiency.

FIG. 3 shows a schematic cross-sectional view of a packing ring 340 including a brush seal 342, suitable for use in an embodiment of the invention, and as shown in FIG. 2 (240A-C). The brush seal 342 comprises a plurality of brushes 342A radially oriented substantially perpendicular to a longitudinal axis of the rotor to be sealed against (not shown) and disposed between an HP block 342B and an IP block 342C.

As noted above, the invention is not limited to the use of brush seals. Any pressure drop-limited seal may be employed, leaf seals being one additional example. The pressure drop-limited seals useful in practicing the various embodiments of the invention include an element (e.g., brush, leaf, etc.) capable of movement in response to a pressure difference across the seal. For example, a brush of a brush seal bends or otherwise moves toward a side of the seal experiencing a lower pressure and away from a side of the seal experiencing a higher pressure. Leaves of a leaf seal move similarly in response to a pressure difference across the seal.

In some embodiments of the invention, the packing ring 340 may further include teeth 344, 346, as are often found in known packing rings. In other embodiments of the invention, the reduction in mid-packing leakage effected by the brush seal or leaf seal may obviate the need or desirability for such teeth.

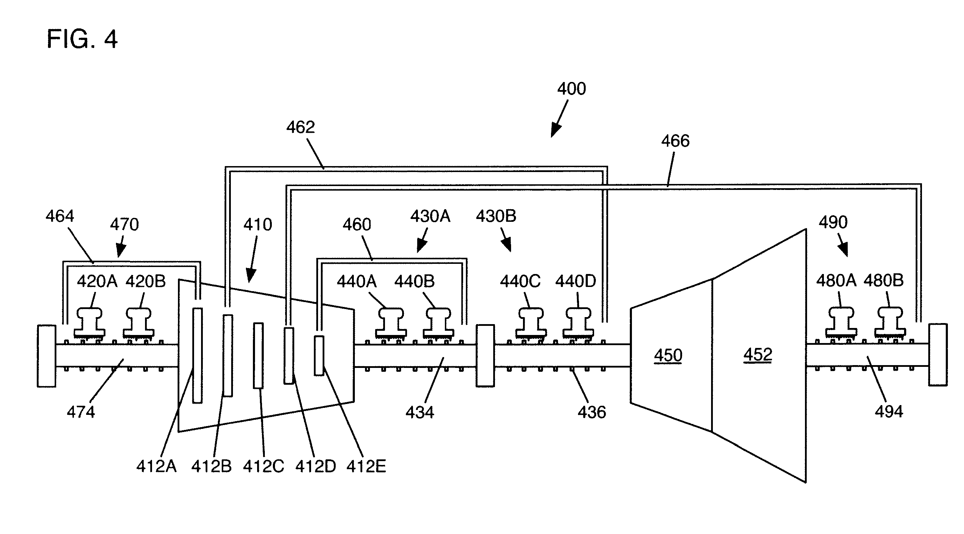

FIG. 4 shows a schematic cross-sectional view of a separate HPIP steam turbine 400 according to an embodiment of the invention. Here, rather than a single mid-packing section between the HP section 410 and the IP section 450, the steam turbine 400 includes four end-packing sections 470, 430A, 430B, 490, one on either side of the HP section 410, one adjacent the IP section 450, and one adjacent a low-pressure (LP) section 452.

In the embodiment shown in FIG. 4, the conduits 460-466 function similarly to those shown in FIG. 2, permitting the flow of steam between the HP section 410 and the end-packing sections 470, 430A, 430B, 490. Thus, packing rings 420A-B, 440A-B, 440C-D, 480A-B having a pressure drop-limited seal may be employed in each end-packing section 470, 430A, 430B, 490. In other embodiments, such packing rings may be employed in fewer than each end-packing section.

Steam turbine systems according to the invention may include a combined HPIP steam turbine or a separate HPIP steam turbine such as those described above and a steam-generating apparatus, such as a boiler, for providing a quantity of steam to such an HPIP steam turbine. Other components of such a steam turbine system will be known to one skilled in the art.

This written description uses examples to disclose the invention, including the best mode, and also to enable any person skilled in the art to practice the invention, including making and using any devices or systems and performing any related or incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

For completeness, various aspects of the invention are now set out in the following numbered clauses:
1. A combined high-pressure - intermediate-pressure (HPIP) steam turbine comprising:
   a high-pressure section;
   an intermediate-pressure section sharing a common rotor with the high-pressure section;
   at least one packing ring disposed along a length of the rotor and between the high-pressure section and the intermediate-pressure section; and
   at least one conduit having a first end disposed adjacent a packing ring and a second end disposed adjacent a steampath stage of the high-pressure section.
2. The combined HPIP steam turbine of clause 1, wherein the at least one packing ring includes a pressure drop-limited seal.
3. The combined HPIP steam turbine of clause 2, wherein the pressure drop-limited seal includes an element adapted to move in response to a pressure difference across the pressure drop-limited seal.
4. The combined HPIP steam turbine of clause 2, wherein the first end of the at least one conduit is adjacent the at least one packing ring.
5. The combined HPIP steam turbine of clause 2, wherein the at least one conduit includes a plurality of conduits and a first end of each conduit is disposed adjacent a packing ring including a pressure drop-limited seal.
6. The combined HPIP steam turbine of clause 2, wherein the pressure drop-limited seal is selected from a group consisting of: a brush seal and a leaf seal.
7. The combined HPIP steam turbine of clause 6, wherein the pressure drop-limited seal is a brush seal.
8. The combined HPIP steam turbine of clause 2, wherein the at least one conduit is capable of moving a quantity of steam between the steampath stage and an area adjacent the packing ring.
9. The combined HPIP steam turbine of clause 8, wherein the quantity of steam is capable of reducing a pressure difference across the pressure drop-limited seal to less than a maximum design pressure difference for the seal.
10. A separate high-pressure-intermediate-pressure (HPIP) steam turbine comprising:
   a high-pressure section;
   an intermediate-pressure section;
   a low-pressure section;
   at least one rotor engaging at least one of the high-pressure section, the intermediate-pressure section, or the low-pressure section;
   an end-packing region having at least one packing ring disposed along a length of the at least one rotor; and
   at least one conduit having a first end disposed adjacent the end-packing region and a second end disposed adjacent a steampath stage of the high-pressure section.
11. The separate HPIP steam turbine of clause 10, wherein the at least one packing ring includes a pressure drop-limited seal.
12. The separate HPIP steam turbine of clause 11, wherein the pressure drop-limited seal includes an element adapted to move in response to a pressure difference across the pressure drop-limited seal.
13. The separate HPIP steam turbine of clause 11, wherein the first end of the at least one conduit is adjacent the at least one packing ring.
14. The separate HPIP steam turbine of clause 11, wherein the at least one conduit includes a plurality of conduits and a first end of each conduit is disposed adjacent a packing ring including a pressure drop-limited seal.
15. The separate HPIP steam turbine of clause 11, wherein the pressure drop-limited seal is selected from a group consisting of: a brush seal and a leaf seal.
16. The separate HPIP steam turbine of clause 15, wherein the pressure drop-limited seal is a brush seal.
17. The separate HPIP steam turbine of clause 11, wherein the at least one conduit is capable of moving a quantity of steam between the steampath section and the area adjacent the end-packing region.
18. The separate HPIP steam turbine of clause 17, wherein the quantity of steam is capable of reducing a pressure difference across the pressure drop-limited seal to less than a maximum design pressure difference for the seal.
19. A steam turbine system comprising:
   a high-pressure - intermediate-pressure (HPIP) steam turbine comprising:
      a high-pressure section;
      an intermediate-pressure section;
      at least one rotor engaging at least one of the high-pressure section and the intermediate-pressure section;
      at least one packing ring disposed along a length of the at least one rotor; and
      at least one conduit having a first end disposed adjacent a packing ring and a second end disposed adjacent a steampath stage of the high-pressure section; and
      a steam-generating apparatus for providing a quantity of steam to the steam turbine.
20. The steam turbine system of clause 19, wherein the high-pressure section and the intermediate-pressure section share a common rotor.
21. The steam turbine system of clause 19, wherein the at least one packing ring includes a pressure drop-limited seal.
22. The steam turbine system of clause 21, wherein the pressure drop-limited seal includes an element adapted to move in response to a pressure difference across the pressure drop-limited seal.
23. A method of operating a high-pressure - intermediate-pressure (HPIP) steam turbine, the method comprising:
   sealing against a rotor of the HPIP steam turbine using at least one packing ring having a pressure drop-limited seal; and
   directing a quantity of steam between a steampath stage of a high-pressure section of the HPIP steam turbine and a mid-packing section of the HPIP steam turbine containing the at least one packing ring, such that a pressure difference across the pressure drop-limited seal is no greater than a maximum design pressure difference of the pressure drop-limited seal.
24. The method of clause 23, wherein the pressure drop-limited seal is selected from a group consisting of: a brush seal and a leaf seal.

## Claims

1. A combined high-pressure - intermediate-pressure (HPIP) steam turbine (200) comprising:
a high-pressure section (210);
an intermediate-pressure section (250) sharing a common rotor (234) with the high-pressure section (210);
at least one packing ring (240C) disposed along a length of the rotor (234) and
between the high-pressure section (210) and the intermediate-pressure section (250);
and
at least one conduit (264) having a first end (264A) disposed adjacent a packing ring (240C) and a second end (264B) disposed adjacent a steampath stage (212E) of the high-pressure section (210).

2. The combined HPIP steam turbine (200) of claim 1, wherein the at least one packing ring (240C) includes a pressure drop-limited seal (342).

3. The combined HPIP steam turbine (200) of claim 2, wherein the pressure drop-limited seal (342) includes an element (342A) adapted to move in response to a pressure difference across the pressure drop-limited seal (342).

4. The combined HPIP steam turbine of claim 2, wherein the first end of the at least one conduit is adjacent the at least one packing ring.

5. The combined HPIP steam turbine of claim 2, wherein the at least one conduit includes a plurality of conduits and a first end of each conduit is disposed adjacent a packing ring including a pressure drop-limited seal.

6. The combined HPIP steam turbine (200) of claim 2, wherein the pressure drop-limited seal (342) is selected from a group consisting of: a brush seal and a leaf seal.

7. The combined HPIP steam turbine of claim 6, wherein the pressure drop-limited seal is a brush seal.

8. The combined HPIP steam turbine (200) of claim 2, wherein the at least one conduit (264) is capable of moving a quantity of steam between the steampath section (212E) and an area adjacent the packing ring (240C).

9. The combined HPIP steam turbine (200) of claim 8, wherein the quantity of steam is capable of reducing a pressure difference across the pressure drop-limited seal (342) to less than a maximum design pressure difference for the seal.

10. A separate high-pressure - intermediate-pressure (HPIP) steam turbine (400) comprising:
a high-pressure section (410);
an intermediate-pressure section (450);
a low-pressure section (452);
at least one rotor (434, 436, 474, 494) engaging at least one of the high-pressure section (410), the intermediate-pressure section (450), or the low-pressure section (452);
an end-packing region (430A-B, 470, 490) having at least one packing ring (420A-B, 440A-D, 480A-B) disposed along a length of the at least one rotor (434, 436, 474, 494); and
at least one conduit (460-466) having a first end disposed adjacent the end-packing region (430A-B, 470, 490) and a second end disposed adjacent a steampath stage (412A-B, 412D-E) of the high-pressure section (410).

11. The separate HPIP steam turbine (400) of claim 10, wherein the at least one packing ring (420A-B, 440A-D, 480A-B) includes a pressure drop-limited seal (342).

12. The separate HPIP steam turbine (400) of claim 11, wherein the pressure drop-limited seal (342) includes an element (342A) adapted to move in response to a pressure difference across the pressure drop-limited seal (342).

13. The separate HPIP steam turbine (400) of claim 11, wherein the pressure drop-limited seal (342) is selected from a group consisting of: a brush seal and a leaf seal.

14. A method of operating a high-pressure-intermediate-pressure (HPIP) steam turbine, the method comprising:
sealing against a rotor of the HPIP steam turbine using at least one packing ring having a pressure drop-limited seal; and
directing a quantity of steam between a steampath stage of a high-pressure section of the HPIP steam turbine and a mid-packing section of the HPIP steam turbine containing the at least one packing ring, such that a pressure difference across the pressure drop-limited seal is no greater than a maximum design pressure difference of the pressure drop-limited seal.

15. The method of claim 14, wherein the pressure drop-limited seal is selected from a group consisting of: a brush seal and a leaf seal.
